# EUROPÄISCHE PATENTSCHRIFT

(11) **EP 2 524 762 B1**
(45) Veröffentlichungstag und Bekanntmachung des Hinweises auf die Patenterteilung: **17.04.2019**
(21) Anmeldenummer: 12168662.0
(22) Anmeldetag: 21.05.2012
(51) Int. Cl.: B23K 26/04

(54) **Verfahren zur Ermittlung des Arbeitsbereichs einer wärmeerzeugenden Strahlung**
Method for determining the working area of a heat-producing beam
Procédé de détermination de la zone de travail d'un rayonnement produisant de la chaleur

(30) Priorität: 19.05.2011 DE 102011050481
(43) Veröffentlichungstag der Anmeldung: 21.11.2012
(73) Patentinhaber: KUKA Industries GmbH, 86165 Augsburg (DE)
(72) Erfinder: Heinrici, Axel, 14532 Kleinmachnow (DE)
(74) Vertreter: Ege Lee & Partner Patentanwälte PartGmbB

(56) Entgegenhaltungen:
- DE-A1-102007 030 398

## Beschreibung

Die Erfindung bezieht sich auf ein Verfahren zur Ermittlung des Arbeitsbereiches einer wärmeerzeugenden Strahlung, die ein dem Arbeitsbereich vorgeschaltetes optisches Element durchsetzt,

Bei üblichen Glaslinsen macht sich die thermische Linse durch Verschiebung des Brennpunktes in Richtung der Linse bemerkbar.

Die Änderung der optischen Eigenschaft aufgrund von Erwärmung ist insbesondere auch bei Laserstrahlen feststellbar.

Der Brechungsindex n liegt bei optischen Standard-Gläsern im Bereich von 1,4 - 1,6. Im nahen Infrarot sind auch Materialien bis n ≈ 2,5 bekannt, im fernen Infrarot bis ∼ 4. Die Änderung des Brechungsindexes liegt bei üblichen Materialien im Bereich von 1 . 10⁻⁶K⁻¹ bis 10 · 10⁻⁶K⁻¹, d. h. bei Erwärmung um 100 Grad ändert sich der Brechungsindex nur um 10⁻⁴ bis 10⁻³. Die Erwärmung eines Bauteils, das mittig von einem Laserstrahl durchsetzt wird, führt dazu, dass sich das Bauteil in der Mitte deutlich stärker erwärmt als am Rand. Zudem wird das optische Element üblicherweise über dessen Fassung vom Rand her gekühlt. Damit wird die Temperatur und somit der Brechungsindex inhomogen. Dieser Effekt führt zu einer deutlich stärkeren Brennweitenänderung bei Linsen und führt auch bei an sich planflächigen optischen Elementen wie Schutzgläsern, Kristallen oder Filtern zu einer Linsenwirkung. Es sind auch Materialien bekannt, bei denen eine thermische Linse nicht die Wirkung einer Sammellinse, sondern die einer Streulinse aufweist.

Es ist hinreichend bekannt, parasitäre thermische Linsen in Funktionsrichtung des optischen Bauteils, also in Richtung der das optische Bauteil durchsetzenden Strahlung zu messen. Entsprechende optische Elemente oder Bauteile können optische Fenster wie Schutzgläser, Laserkristalle oder Linsen sein. Zur Messung können sogenannte Wellenfrontsensoren verwendet werden, die auch unter der Bezeichnung Shack-Hartmann-Sensoren bekannt sind. Es gibt jedoch weitere Verfahren zur Fokuslagenbestimmung der Arbeitsstrahlung, die geeignet sind, die Brennweite der Arbeitsstrahlung und damit auch die temperaturabhängige Verschiebung der Fokuslage zu messen. Hierzu gehören das Foucaultsche Schneidenverfahren und das astigmatische Verfahren, welches z.B. in Pick-Ups von CD-, DVD- oder BD-Laufwerken zum Einsatz gelangt.

Bezüglich des Foucaultschen Schneidenverfahrens existieren diverse Varianten, die anstelle einer Schneide Dachkantenspiegel, optische Keile oder Ähnliches benutzen, jedoch sämtlichst auf dem gleichen Prinzip beruhen.

Es sind auch Verfahren bekannt, die die Intensitätsverteilung des Lichtes in verschiedenen Ebenen in der Nähe der Fokusebene direkt messen und somit die Fokuslage über die geometrische Ausdehnung der Intensität bestimmen. Die Fokuslage wird definiert als diejenige Ebene, in der die Intensitätsverteilung die geringste geometrische Ausdehnung hat. Die geometrische Ausdehnung kann dabei über Einbrände oder Kamerasysteme erfasst werden.

Den bekannten Verfahren zur Brennweitenbestimmung und somit zur Ermittlung der Brennweitenverschiebung aufgrund thermischer Erwärmung, also durch die parasitäre thermische Linse, ist gemein, dass die Messstrahlung in der Richtung das optische Element durchstrahlt, in der auch die zu fokussierende, zu verstärkende oder zu transmittierende Arbeitsstrahlung das Bauteil durchsetzt. Dies macht es erforderlich, die Messeinrichtung und ggf. die für die Messstrahlung benutzte Lichtquelle im Weg der Arbeitsstrahlung zu platzieren bzw. Strahlteiler oder Spiegel in den Arbeitsstrahlweg anzuordnen, um die parasitäre thermische Linse zu messen und somit die Fokuslagenverschiebung der Arbeitsstrahlung zu ermitteln. Die Fokuslage ist wichtig, um den Arbeitsbereich festzulegen, der z.B. bei der Bearbeitung von Werkstücken mittels Laserstrahlung wie beim Schweißen oder Schneiden bekannt sein muss, um präzise arbeiten zu können.

Zur Bestimmung wärmebedingter optischer Eigenschaftsänderungen eines optischen Elements durchsetzt nach der DE-10 2007 030 398 A1 eine Messstrahlung das optische Element quer zur die Erwärmung erzeugenden Strahlung, wobei die Absorption der Messstrahlung in dem optischen Element gemessen wird.

Der DE-A-10 2008 048 266 sind ein Verfahren und eine Vorrichtung zur schnellen Bestimmung von separaten Anteilen von Volumen- und Oberflächenabsorption von optischen Materialien zu entnehmen. Hierzu wird ein Messstrahl durch das optische Material hindurchgeleitet, um die durch eine thermische Linse verursachte Ablenkung mittels eines zweidimensionalen Sensors zu ermitteln.

Gegenstand der DE-A-101 39 906 ist eine Anordnung zur optischen Bestimmung der thermischen Linse eines teiltransparenten Mediums aufgrund eines dieses durchdringenden Lichtbündels. Hierzu wird quer zu dem Lichtstrahl ein Lasermessstrahl gerichtet.

Ein Dünnschichtchromatograf ist der US-A-4 591 272 zu entnehmen. Zur Bestimmung der thermischen Linse aufgrund einer auf den Chromatografen auftreffenden ersten Laserstrahlung wird eine zweite Laserstrahlung benutzt, die senkrecht zu der ersten Laserstrahlung verläuft und mit einem Fotodiodendetektor gemessen wird.

Der vorliegenden Erfindung liegt die Aufgabe zugrunde, ein Verfahren der eingangs genannten Art so weiterzubilden, dass ungeachtet der wärmebedingten optischen Eigenschaftsänderungen des dem Arbeitsbereich vorgeschalteten optischen Elementes der Arbeitsbereich genau bestimmt werden kann.

Zur Lösung der Aufgabe wird vorgeschlagen, dass das optische Element in einer ersten Richtung von der wärmeerzeugenden Strahlung durchsetzt wird, dass zur Ermittlung von Eigenschaftsänderungen des optischen Elements dieses von einer Messstrahlung in einer zweiten Richtung durchsetzt wird, die quer zu der ersten Richtung verläuft, dass zur Bestimmung einer Kalibriergröße Fokuslagenverschiebung oder Strahlenverlaufsänderung der Messstrahlung in Abhängigkeit von gemessener Ausprägung einer durch die wärmeerzeugende Strahlung erzeugten thermischen Linse in dem optischen Element ermittelt wird und dass in Abhängigkeit von der Kalibriergröße Fokuslagenverschiebung der wärmeerzeugenden Strahlung ermittelt wird und Arbeitsbereich der wärmeerzeugenden Strahlung in Abhängigkeit von der ermittelten Fokuslagenverschiebung verändert wird.

Bevorzugterweise ist vorgesehen, dass die Messstrahlung derart zum optischen Element ausgerichtet wird, dass die Messstrahlung bzw. deren optische Achse die erste Richtung schneidet, also das optische Element in dem Bereich durchsetzt, in dem der Schwerpunkt der Erwärmung durch die wärmeerzeugende Strahlung liegt.

In diesem Zusammenhang ist Folgendes anzumerken. Sowohl die Messstrahlung als auch die Strahlung, die zu einer Erwärmung des optischen Elements führt und somit die Eigenschaftsänderung des optischen Elements, also die thermische Linse verursacht, Strahlenbündel sind. Es liegt folglich eine flächige Erstreckung der Strahlung senkrecht zur Strahlrichtung vor. Wird von Richtung gesprochen, so fällt diese mit der optischen Achse der wärmeerzeugenden Strahlung bzw. der Messstrahlung zusammen.

Im Falle einer kompletten Rotationssymmetrie würden folglich die wärmeerzeugende Strahlung, wie Laserstrahlung, das optische Element wie Linse sowie die Temperaturverteilung rotationssymmetrisch zur selben Achse verlaufen. In diesem Fall ist die Symmetrieachse die optische Achse der wärmeerzeugenden Strahlung und des optischen Elementes und auf dieser liegt der heißeste Bereich des optischen Elements und somit der Schwerpunkt der Temperaturverteilung.

Da die parasitäre thermische Linse sich in dem Bereich ausbildet, in dem die Arbeitsstrahlung das optische Element durchsetzt, ergibt sich für die Messstrahlung eine Fokuslagenverschiebung, wenn die optische Achse der Messstrahlung die optische Achse der Arbeitsstrahlung schneidet, da in diesem Bereich der Schwerpunkt der Erwärmung des optischen Elements liegt. Verläuft die optische Achse der Messstrahlung versetzt zu der optischen Achse der Arbeitsstrahlung, d. h. die optische Achse der Messstrahlung verläuft außerhalb des Schwerpunkts der Erwärmung des optischen Elements, so äußert sich die parasitäre thermische Linse durch eine Ablenkung der Messstrahlung. Beide Größen können benutzt werden, um in Abhängigkeit von der Ausprägung der thermischen Linse im optischen Element die Fokuslagenverschiebung der Arbeitsstrahlung zu ermitteln.

Insbesondere ist vorgesehen, dass der Arbeitsbereich der Arbeitsstrahlung in Abhängigkeit von der Ausprägung der thermischen Linse im optischen Element gesteuert, insbesondere geregelt wird. Hierzu können zunächst Kalibrierkurven aufgenommen werden, bei denen die Fokuslagenverschiebung in Abhängigkeit von der Ausprägung der thermischen Linse ermittelt wird. Während die Arbeitsstrahlung das optische Element durchsetzt, kann die Ausprägung der thermischen Linse gemessen werden, um sodann in Abhängigkeit von der abgelegten Kalibrierkurve den Arbeitsbereich zu verändern. Somit kann bei optimaler Nutzung die Arbeitsstrahlung reproduzierbar eingesetzt werden. Dies ist insbesondere bei einer Laserstrahlung dann wichtig, wenn mit dieser gelötet oder geschweißt werden soll. Aber auch beim Schneiden mittels Laserstrahlung ist es wichtig, die genaue Fokuslage zu kennen, um den Arbeitsbereich festzulegen.

Unabhängig hiervon ist anzumerken, dass die Arbeitsstrahlung nicht zwingend eine Laserstrahlung sein muss. Auch kann dann, wenn das optische Element nicht von einer Strahlung durchsetzt wird, erfindungsgemäß die thermische Linse ermittelt werden, z.B. dann, wenn sich das optische Element in eine einer Wärmelast ausgesetzten Umgebung befindet und Kenntnisse der optischen Eigenschaftsänderungen des optischen Elements benötigt werden.

Auch zeichnet sich die Erfindung insbesondere dadurch aus, dass das optische Element von mehreren Messstrahlen durchsetzt wird, die unabhängig voneinander zur Ermittlung eines Brechnungsindexprofils des optischen Elementes, insbesondere in Abhängigkeit vom Radius über das gesamte optische Element vermessen werden.

Aufgrund der Erfindung ist es möglich, die Ausprägung der parasitären thermischen Linse -vereinfacht nachstehend thermische Linse genannt- zu messen, indem eine Messstrahlung quer zur Arbeitsstrahlung das optische Element durchsetzt. Insbesondere kann eine Messung durchgeführt werden, ohne dass die Messeinrichtung oder eine Lichtquelle, die für die Messung benötigt wird, oder Strahlteiler in den Strahlenweg der Arbeitsstrahlung angeordnet werden müssen. Hierdurch ergibt sich des Weiteren der Vorteil, dass Messungen durchgeführt werden können, während das optische Element seine eigentliche Funktion erfüllt. Abweichend vom Stand der Technik fallen somit die erste Richtung und die zweite Richtung nicht zusammen.

So kann die thermische Linse eines aktiven Mediums eines Lasers vermessen werden, während der Laser in Betrieb ist, ohne dass Laserstrahlung und Messstrahlung durch Strahlteiler oder ähnliche Elemente in den Strahlgang ein- bzw. ausgekoppelt werden müssen. Als weiteres Beispiel ist anzugeben, dass die Linse und/oder das Schutzglas einer Bearbeitungsoptik, etwa zum Schweißen oder Löten, vermessen werden kann, während geschweißt oder gelötet wird. Das aktive Medium des Lasers kann aufgrund der erfindungsgemäßen Lehre gemessen werden, wenn der Laser in Betrieb ist.

Es zeigen:
- Fig. 1: eine Draufsicht auf ein optisches Element,
- Fig. 2: optisches Element gemäß Fig. 1 im Querschnitt,
- Fig. 3: eine Prinzipdarstellung einer astigmatischen Fokuslagenmessung einer ein optisches Element durchsetzenden Messstrahlung mit und ohne thermischer Linse und
- Fig. 4: eine Prinzipdarstellung einer Fokuslagenmessung einer ein optisches Element durchsetzenden Messstrahlung mit und ohne thermischer Linse.

Die erfindungsgemäße Lehre zur Ermittlung einer parasitären thermischen Linse soll anhand einer Linse 10 als optisches Element erläutert werden, ohne dass das Beispiel einschränkend zu verstehen ist. Durch die Linse 10 soll beim Ausführungsbeispiel eine Strahlung fokussiert werden, bei der es sich bevorzugterweise um Laserstrahlung handelt, die in der Fokusebene als Arbeitsbereich z.B. zum Löten oder Schweißen von Bauteilen genutzt wird. Die Strahlen 11, die ein Bündel bilden, das seinerseits eine optische Achse besitzt, durchsetzen die Linse 10 in einer ersten Richtung 12, die der optischen Achse entspricht, wobei die optische Achse der Strahlung 11 senkrecht oder nahezu senkrecht eine von der Linse 10 aufgespannte Ebene 14 durchsetzt. Hierbei muss es sich nicht wie im Ausführungsbeispiel um eine plangeschliffene Ebene des optischen Elements 10 handeln. Vielmehr kann es sich auch um die Mittelebene einer Linse bzw. eines Linsensystems handeln. Ferner ist darauf hinzuweisen, dass die Randstrahlen der mittels der Linse 10 zu fokussierenden Strahlung 11 Richtung der optischen Achse der Linse 10 gebrochen sind, die mit der Strahlrichtung bzw. optischen Achse 12 übereinstimmt. Ungeachtet dessen wird vereinfacht die Richtung 12 als Strahlrichtung der Strahlung 11 bezeichnet, entlang der die optische Achse der Strahlung 11 verläuft. Diese Strahlrichtung 12 wird auch als erste Richtung bezeichnet.

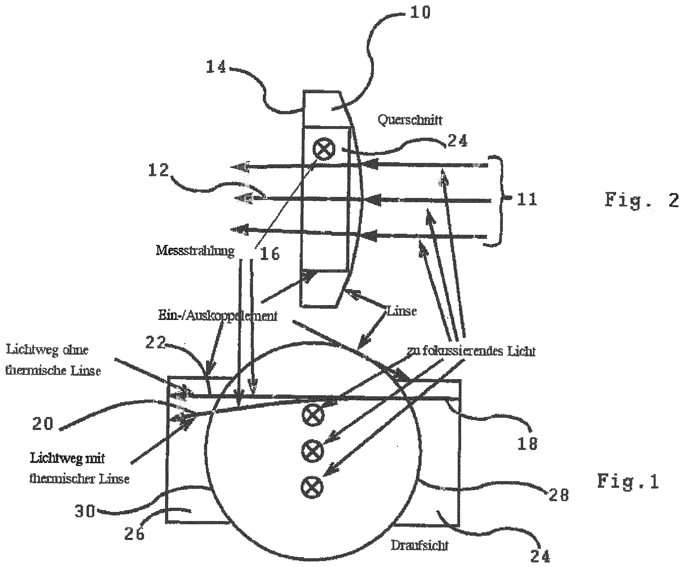

Um in Abhängigkeit von der Erwärmung der Linse 10, die durch die Strahlung 11 bedingt ist, die Fokuslagenverschiebung der Strahlung 11 zu bestimmen, wird eine Messstrahlung 16 benutzt, die im Ausführungsbeispiel parallel oder in etwa parallel zu der Ebene 14 der Linse 10 verläuft und entlang einer zweiten Richtung 18 verläuft. Entlang der zweiten Richtung 18 verläuft damit der Mittelpunktstrahl des Messstrahlungsbündels und damit dessen optische Achse. Die Messstrahlung 16 wird dann, wenn diese die Linse 10 außermittig und damit beabstandet zur optischen Achse (Richtung 12) der Strahlung 11 durchsetzt, abgelenkt, sofern eine thermische Erwärmung der Linse 10 erfolgt. Der abgelenkte Strahl wird in der Figur 1 mit dem Bezugszeichen 20 und der nicht abgelenkte Strahl mit dem Bezugszeichen 22 gekennzeichnet, der mit der zweiten Richtung 18 zusammenfällt.

Die Darstellung in den Figuren verdeutlicht, dass die zumindest eine die Messstrahlung 16 erzeugende Lichtquelle die Strahlung 16 entlang der zweiten Richtung 18 emittiert, die senkrecht zur Strahlrichtung 12 verläuft, die die Hauptfunktionsrichtung der Strahlung 11 wie Laserstrahlung ist.

Schneidet im zuvor erläuterten Ausführungsbeispiel Ausführungsbeispiel die optische Achse der Messstrahlung 16 die Hauptfunktionsrichtung, also die optische Achse der Arbeitsstrahlung 11 nicht, so besteht alternativ die Möglichkeit, dass die optische Achse der Messstrahlung 16 die Hauptfunktionsrichtung und damit die optische Achse der Arbeitsstrahlung 11 und damit die Richtung 12 schneidet, wie nachstehend erläutert wird.

Bei der Linse 10 handelt es sich im Ausführungsbeispiel um ein rotationssymmetrisches Bauteil, sodass Ein- und Auskoppelelemente 24, 26 benötigt werden, die aus einem Material bestehen, das einen Brechungsindex aufweist, der dem der Linse 10 entspricht oder zumindest ähnlich ist. Im Ausführungsbeispiel haben die Ein- und Auskoppelelemente 24, 26 zylindrisch konkave Begrenzungsflächen 28, 30, deren Krümmungsradien dem halben Durchmesser der Linse 10 entsprechen. Die Ein- und Auskoppelelemente 24, 26 werden mit den konkaven Flächen 28, 30 an äußere Mantelflächen der Linse 10 angesetzt und z.B. mit Kitt verbunden, der einen zumindest annähernd gleichen Brechungsindex wie die Linse 10 sowie die Ein- und Auskoppelelemente 24, 26 aufweist.

Alternativ zur Verwendung der Ein- und Auskoppelelemente 24, 26 kann das zu vermessende Bauteil - im Ausführungsbeispiel die rotationssymmetrische Linse 10 - auf ihre Mantelfläche zurückgeschliffen und ggf. poliert und verspiegelt werden, sodass die Messstrahlung in geeigneter Weise in das Bauteil ein- und wieder austreten kann. Z.B. kann eine Linse in einem Segment der Mantelfläche plan angeschliffen werden, um die Messstrahlung ein- bzw. austreten zu lassen. Anstatt des Eintritts der Messstrahlung auf einer Seite und dem Austritt an der gegenüberliegenden Seite kann diese auch verspiegelt werden. In diesem Fall fällt Ein- und Austritt der Messstrahlung an derselben Seite des zu messenden Bauteils zusammen.

Im Ausführungsbeispiel der Fig. 1, 2 und 4 durchsetzt die Messstrahlung 16 die rotationssymmetrische Linse 10 außermittig und damit beabstandet zur optischen Achse (Richtung 12) der Arbeitsstrahlung 11, die die Linse 10 mittig durchsetzt. Um die thermische Linse zu vermessen, kann die Messstrahlung kollimiert - also in sich parallel - senkrecht zur Hauptfunktionsrichtung, also zur Richtung 12 die Linse 10 durchsetzen. Da der Messstrahl 16 die optische Achse und damit die Hauptfunktionsrichtung -erste Richtung 12- der Linse 10 nicht schneidet, erfährt die Messstrahlung 16 und damit der Messstrahl eine Ablenkung, wie aus einem Vergleich der Strahlrichtungen 20, 22 nach Durchsetzen der Linse 10 verdeutlicht wird. Die Änderung des Auftrefforts kann mittels einer nicht dargestellten Messeinrichtung wie Duandendetektor, einer PSD (Position Sensitive Diode) oder eine (Zeilen-) Kamera erfasst werden.

Durch Anbringung einer Sammellinse im Bereich der möglichen Auftrefforte wird die Messstrahlung 16 wieder in einem Punkt gebündelt. Dieser Brennpunkt verschiebt sich in Abhängigkeit von der Winkelablenkung der Messstrahlung 16 und ist dabei in erster Ordnung unabhängig von der Verschiebung des Auftreffortes.

Es besteht auch die Möglichkeit, dass die kollimierte, also in sich parallele Messstrahlung senkrecht die optische Achse des zu vermessenden Bauteils schneidet, die mit der ersten Richtung 12 oder der optischen Achse der Arbeitsstrahlung 11 übereinstimmt. Der Messstrahl erfährt beim Ausbilden einer thermischen Linse eine astigmatische Fokusverschiebung. Diese kann durch die Foucaultsche Schneidenmethode mit Schneiden einer Einrichtung parallel zur optischen Achse des zu messenden Bauteils festgestellt werden. Auch besteht die Möglichkeit, die thermische Linse mit einem astigmatischen Fokuslagensensor zu erfassen.

Alternativ besteht auch die Möglichkeit, dass ein zu vermessendes Bauteil mit mehreren Messstrahlen durchsetzt wird, die die optische Achse der Arbeitsstrahlung 11 schneiden oder dieser unterschiedlich nahekommen. Die Messstrahlen können einzeln und unabhängig voneinander in Lage und Winkel oder bezüglich einer astigmatischen Verschiebung vermessen werden. Hierdurch ist es möglich, nicht nur das Ausbilden einer thermischen Linse an sich, sondern das Brechnungsindexprofil in Abhängigkeit vom Radius für das gesamte Bauteil zu bestimmen.

Das erfindungsgemäße Verfahren kann nicht nur bezüglich des Auftretens einer parasitären thermischen Linse bei optischen Linsen oder Linsensystemen, sondern auch bei Schutzgläsern, aktiven Medien eines Lasers, wie Festkörpereinkristallen, Kristallen zur Frequenzvervielfachung oder spektralen Filtern angewendet werden, um nur einige weitere Beispiele zu nennen.

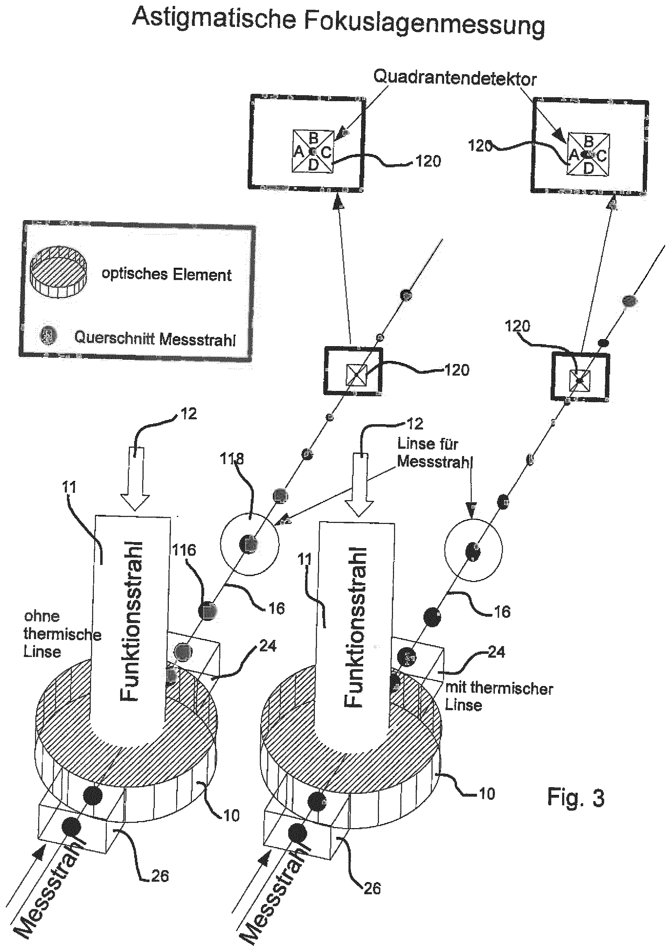

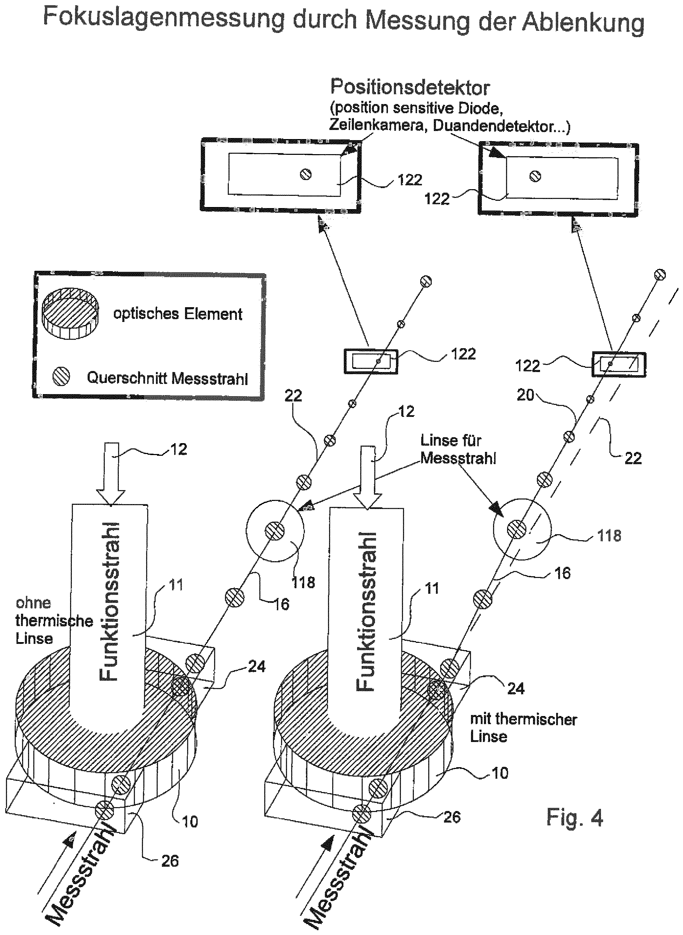

Anhand der Fig. 3 und 4 sollen rein prinzipiell Messverfahren verdeutlicht werden, um eine Fokuslagenmessung der Messstrahlung 16 durchzuführen, die das optische Element 10 durchsetzt. Bei den linken Darstellungen in den Fig. 3 und 4 weist das optische Element 10 keine thermische Linse auf, wohingegen in den rechten Darstellungen eine thermische Linse vorhanden ist.

Ungeachtet dessen ist sowohl in der linken als auch in der rechten Darstellung jeweils prinzipiell die die thermische Linse verursachende Strahlung 11, die als Funktionsstrahl bezeichnet wird, dargestellt. Optische Achse des Funktionsstrahls 11 und damit die erste Richtung ist mit 12 gekennzeichnet.

Bei der astigmatischen Fokuslagenmessung gemäß Fig. 3 durchsetzt die Messstrahlung 16, deren Querschnitt als ausgefüllter Kreis 116 symbolisiert ist, nach Durchdringen des optischen Elements 10 und den Ankoppelelementen 24, 26 eine Linse 118, mittels der die Messstrahlung 16 fokussiert wird. Sodann trifft die Messstrahlung 16 im Ausführungsbeispiel auf einen Quadrantendetektor 120 mit den Quadranten A, B, C, D. Der fokussierte Messstrahl ist dabei auf den Schnittpunkt der Quadranten A, B, C, D ausgerichtet. Zur astigmatischen Fokuslagenbestimmung werden die Detektorsignale der Quadranten A, B, C, D wie folgt verrechnet. Zunächst werden die Detektorsignale A und C sowie B und D addiert. Von den diesbezüglichen Summensignalen wird ein Differenzsignal gebildet, das heißt (A+C) - (B+D). Messtechnisch hat dies den Vorteil, dass das Signal genau dann 0 ist, wenn der zu messende Messstrahl 16 rund ist und mittig auf den Detektor trifft. Hierdurch wird ein Abgleich der Messschaltungen vereinfacht. Des Weiteren wird dieses Differenzsignal durch kleine seitliche Verschiebungen des Auftreffpunkts, also Spots, nur wenig beeinflusst, wodurch die mechanische Ausrichtung der optischen Komponente vereinfacht und den Messaufbau unempfindlich gegenüber Vibrationen macht. Bildet sich eine thermische Linse aufgrund der das optische Element 10 durchsetzenden Strahlung 11 wie Laserstrahlung aus, so erfolgt im Auftreffbereich des Quadrantendetektors 120 eine Defokussierung, sofern der Messstrahl 16 das optische Element 10 mittig durchsetzt und Schwerpunkt der Erwärmung des optischen Elementes 10 mittig liegt. Dies ist dann der Fall, wenn auch der Funktionsstrahl 11 mittig das optische Element 10 durchdringt, wie dies rein prinzipiell zeichnerisch dargestellt ist.

Aus der Abweichung des Differenzsignals lässt sich sodann die Fokuslagenverschiebung des optischen Elementes aufgrund der thermischen Linse bestimmen.

In Fig. 4 durchsetzt der Messstrahl 16 das optische Element 10 außermittig, also außerhalb des Schwerpunkts der Erwärmung, die durch den das optische Element 10 mittig durchsetzenden Arbeitsstrahl (Funktionsstrahl 11) erfolgt. In diesem Fall wird der Messstrahl 16 abgelenkt. Die Ablenkung wird in der Fig. 4 rechts deutlich. So verläuft der Messstrahl 16, d. h. dessen optische Achse 22 dann, wenn keine thermische Linse vorhanden ist, also bei fehlender Ablenkung entlang der durchgezogenen Geraden 22 (zweite Richtung) in der linken Darstellung, die der gestrichelten Linie in der rechten Darstellung der Fig. 4 entspricht. Weist das optische Element 10 eine thermische Linse auf, so erfolgt eine Ablenkung (durchgezogene Gerade 20). Diese Ablenkung wird auf einem Positionsdetektor 122 festgestellt. Bei dem Positionsdetektor kann es sich um eine Zeilenkamera, einen Duandendetektor oder eine positionsempfindliche Diode handeln, um nur beispielhaft Ausführungsformen eines Positionsdetektors zu nennen.

Anzumerken ist, dass im Falle der Fokuslagenmessung durch Messung der Ablenkung die Möglichkeit bestünde, die Linse 118 wegzulassen. In diesem Fall würde jedoch ein großer Spot mit niedriger Intensität auf dem Detektor 122 festgestellt werden. Daher ist es aus messtechnischer Sicht günstiger, den Messstrahl 16 auf den Detektor 122 zu fokussieren.

Zu erwähnen ist des Weiteren, dass mit der Linse 118 im Messstrahl 16 der Winkel der austretenden Messstrahlung unabhängig vom Abstand erfassbar ist. Ohne Linse 118 wäre der Versatz u. a. vom Abstand des Detektors 122 von der thermischen Linse und der Dicke der Ein- und Auskoppelelemente 24, 26 abhängig.

Beim Foucaultschen Schneidenverfahren und bei der astigmatischen Fokuslagenmessung, also bei den Verfahren, bei denen die Messstrahlung 16 mittig durch den erwärmten Bereich der optischen Linse 10 tritt, wird die Messstrahlung 16 selbst fokussiert bzw. defokussiert. Bei der Messung der Ablenkung bleibt eine eventuelle Fokussierung oder Defokussierung der Messstrahlung 16 durch die thermische Linse unberücksichtigt.

## Patentansprüche

1. Verfahren zur Ermittlung des Arbeitsbereiches einer wärmeerzeugenden Strahlung, die ein dem Arbeitsbereich vorgeschaltetes optisches Element durchsetzt, wobei das optische Element in einer ersten Richtung (12) von der wärmeerzeugenden Strahlung durchsetzt wird, und zur Ermittlung von Eigenschaftsänderungen des optischen Elements und zur Bestimmung einer Kalibriergrösse dieses von einer Messstrahlung (16) in einer zweiten Richtung (18) durchsetzt wird, die quer zu der ersten Richtung (12) verläuft, und in Abhängigkeit von der Kalibriergröße Fokuslagenverschiebung der wärmeerzeugenden Strahlung ermittelt wird und Arbeitsbereich der wärmeerzeugenden Strahlung in Abhängigkeit von der ermittelten Fokuslagenverschiebung verändert wird, **dadurch gekennzeichnet, dass** zur Bestimmung der Kalibriergröße Fokuslagenverschiebung oder Strahlenverlaufsänderung der Messstrahlung (60) in Abhängigkeit von gemessener Ausprägung einer durch die wärmeerzeugende Strahlung erzeugten thermischen Linse in dem optischen Element (10) ermittelt wird.

2. Verfahren nach Anspruch 1,
**dadurch gekennzeichnet,**
**dass** die zweite Richtung (18) senkrecht zu der ersten Richtung (12) verläuft.

3. Verfahren nach zumindest einem der vorhergehenden Ansprüche,
**dadurch gekennzeichnet,**
**dass** die Messstrahlung (16) derart zum optischen Element (10) ausgerichtet wird, dass die Messstrahlung (16) mit ihrer optischen Achse das optische Element im Schwerpunktbereich ihrer durch die wärmeerzeugende Strahlung erfolgten Erwärmung schneidet.

4. Verfahren nach zumindest Anspruch 1,
**dadurch gekennzeichnet,**
**dass** Arbeitsbereichslage der wärmeerzeugenden Strahlung in Abhängigkeit von der Ausprägung der thermischen Linse gesteuert, insbesondere geregelt wird.

5. Verfahren nach zumindest einem der vorhergehenden Ansprüche,
**dadurch gekennzeichnet,**
**dass** das optische Element (10) von mehreren unabhängigen Messstrahlen durchsetzt wird, die unabhängig voneinander gemessen werden.

6. Verfahren nach zumindest einem der vorhergehenden Ansprüche,
**dadurch gekennzeichnet,**
**dass** die Messstrahlung senkrecht eine Eintrittsfläche des optischen Elements (10) oder eines mit dem optischen Element vorhandenen Einkoppelelements (24) durchsetzt und dass die Messstrahlung auf gegenüberliegender Seite des optischen Elements entweder eine parallel zu der Eintrittsfläche verlaufende Austrittsfläche durchsetzt oder an einer parallel zu der Eintrittsfläche verlaufenden verspiegelten Fläche reflektiert wird.

## Claims

1. Method for determining the working area of a heat-producing beam, which penetrates an optical element arranged upstream of the working area, wherein the
optical element is penetrated in a first direction (12) by the heat-producing beam, and for determining changes in the properties of the optical element and for determining a calibration variable the latter is penetrated by a measuring beam (16) in a second direction (18) which runs transverse to the first direction (12),
and as a function of the calibration variable the focal shift of the heat-producing beam is determined and the working area of the heat-producing beam is changed as a function of the determined focal shift, **characterised in that** for determining the calibration variable the focal shift or the beam path change of the measuring beam (60) is determined as a function of the measured specification of a thermal lens produced by the heat-producing beam in the optical element (10).

2. Method according to claim 1,
**characterised in that**
the second direction (18) is perpendicular to the first direction (12).

3. Method according to at least one of the preceding claims,
**characterised in that**
the measuring beam (16) is aligned relative to the optical element (10) such that the measuring beam (16) with its optical axis intersects the optical element in the focal area of the heating of the latter performed by the heat-producing beam.

4. Method according to at least claim 1,
**characterised in that**
the position of the working area of the heat-producing beam is controlled as a function of the specification of the thermal lens, in particular is regulated.

5. Method according to at least one of the preceding claims,
**characterised in that**
the optical element (10) is penetrated by a plurality of independent measuring beams, which are measured independently of one another.

6. Method according to at least one of the preceding claims,
**characterised in that**
the measuring beam penetrates perpendicularly an inlet area of the optical element (10) or a coupling element (24) provided with the optical element, and **in that** the measuring beam on the opposite side of the optical element either penetrates an outlet area parallel to the inlet area or is reflected on a mirrored surface parallel to the inlet area.

## Revendications

1. Procédé de détermination de la zone de travail d'un rayonnement produisant de la chaleur qui traverse un élément optique monté en amont de la zone de travail,
l'élément optique étant traversé dans une première direction (12) par le rayonnement produisant de la chaleur et, pour déterminer des modifications de propriétés de l'élément optique et pour déterminer une valeur de calibrage, celui-ci est traversé par un rayonnement de mesure (16) dans une deuxième direction (18) qui s'étend perpendiculairement à la première direction (12),
et, en fonction de la valeur de calibrage,
le décalage des positions focales du rayonnement produisant de la chaleur étant déterminé et la zone de travail du rayonnement produisant de la chaleur étant modifiée en fonction du décalage des positions focales, **caractérisé en ce que** pour déterminer la valeur de calibrage, on détermine le décalage des positions focales ou la modification du parcours de rayonnement du rayonnement de mesure (60) en fonction de la caractéristique mesurée d'une lentille thermique engendrée par le rayonnement produisant de la chaleur dans l'élément optique (10).

2. Procédé selon la revendication 1,
**caractérisé en ce que**
la deuxième direction (18) s'étend perpendiculairement à la première direction (12).

3. Procédé selon au moins l'une des revendications précédentes,
**caractérisé en ce que**
le rayonnement de mesure (16) est orienté de telle sorte par rapport à l'élément optique (10) que le rayonnement de mesure (16) coupe avec son axe optique l'élément optique dans le domaine prioritaire de son réchauffement réalisé par le rayonnement produisant de la chaleur.

4. Procédé selon au moins la revendication 1,
**caractérisé en ce que**
la position de la zone de travail du rayonnement produisant de la chaleur est commandée, en particulier régulée en fonction de la caractéristique de la lentille thermique

5. Procédé selon au moins l'une des revendications précédentes,
**caractérisé en ce que**
l'élément optique (10) est traversé par plusieurs rayonnements de mesure indépendants qui sont mesurés indépendamment les uns des autres.

6. Procédé selon au moins l'une des revendications précédentes,
**caractérisé en ce que**
le rayonnement de mesure traverse à la verticale une surface d'entrée de l'élément optique (10) ou d'un élément de couplage (24) présent avec l'élément optique et **en ce que** le rayonnement de mesure soit traverse sur la face opposée de l'élément optique une surface de sortie s'étendant parallèlement à la surface d'entrée soit est réfléchi sur une surface miroitante s'étendant parallèlement à la surface d'entrée.
